# EUROPEAN PATENT APPLICATION

(11) **EP 2 562 610 A2**
(43) Date of publication of application: **27.02.2013**
(21) Application number: 12181445.3
(22) Date of filing: 23.08.2012
(51) Int. Cl.: G05B 15/02, G05B 19/042

(54) **Methods and apparatus for controlling irrigation systems**

(30) Priority: 25.08.2011 US 201113217478
(71) Applicant: General Electric Company, Schenectady, NY 12345 (US)
(72) Inventor: Littrell, Nathan Bowman, Minden, NV 89423 (US)
(74) Representative: Picker, Madeline Margaret

(57) **Abstract**

A method (400) for controlling an irrigation system is described. The method (400) includes receiving (402), via a communication interface, a control signal from a utility. The method also includes determining (404) whether or not to base operation of the irrigation system at least in part on the control signal.

## Description

### BACKGROUND OF THE INVENTION

The present disclosure relates generally to the transmission and distribution of electricity over an electrical grid, and more specifically, to methods and apparatus for use in controlling irrigation systems.

The combination of the increasing world population and the increased use of electric vehicles has created an increased electricity energy demand. Energy demand has also increased for use with buildings, and/or to charge batteries or other energy sources used in electric vehicles. The demand on the power grid has increased as the cost of fuel has increased. Such demands will likely cause an increase in the price of energy supplied from the power grid. In particular, initially at least, the price of energy is likely to increase during peak times of high demand.

Currently, at least some known utilities use demand response systems that enable customers to enroll in at least one demand response program to manage the consumption of energy by their customers in response to supply conditions. Such known demand response systems are commonly applied to power consuming devices such as, for example, air conditioners, electric water heaters, washing machines, pool pumps, etc. Examples of known demand response programs include a direct control program, a critical peak pricing program, and a time-of-use program. The initiation and/or implementation of a demand response program by a utility is known as a demand response event. A demand response event is initiated by a utility transmitting a plurality of signals to its customers. For example, a demand response event representative of a direct load control program, is initiated when the utility transmits a signal to a device within a building, such as an in-home smart device and/or smart thermostat, that enables the utility to directly control the usage of energy consuming machines within the building. A demand response event representative of a critical peak pricing program occurs when the utility transmits pricing signals to its customers during peak demand times. The pricing signals enable the utility to apprise customers of heightened energy prices during peak demand time periods such that customers may limit their energy consumption during such peak demand time periods. A demand response event representative of a time-of-use program occurs when the utility transmits a signal to a customer that is representative of energy prices that correspond to a time range such that the customer may identify an optimal time of day and/or day of the week to consume energy to ensure a low energy price rate.

Similar to electric energy, demand for water often exceeds or strains the water supply available from a water utility. Particularly during times of drought and/or high temperatures, it is often desirable to reduce consumers' use of water. More particularly, it may be desirable to shift the time when water is used by consumers. Many municipalities, cities, etc. have laws and/or regulations restricting the use of water in order to conserve water. In particular, use of water for irrigation, e.g., lawn watering, is often restricted to certain times of day and/or certain days of the week. Further, in some cases, use of water for such ornamental irrigation may be prohibited completely.

### BRIEF DESCRIPTION OF THE INVENTION

In one aspect, a method for controlling an irrigation system includes receiving, via a communication interface, a control signal from a utility. The method also includes determining whether or not to base operation of the irrigation system at least in part on the control signal.

In another aspect, an irrigation controller for controlling an irrigation system is disclosed. The irrigation controller includes a communication interface for receiving a signal from a utility company, and a processor coupled in communication with said communication interface. The processor is programmed to receive, via the communication interface, a control signal from the utility, and determine whether or not to base operation of the irrigation system at least in part on the control signal.

In yet another aspect, a home automation system is provided. The home automation system includes an irrigation system and an irrigation controller coupled to control operation of the irrigation system. The irrigation controller includes a communication interface for receiving a signal from a utility company, and a processor coupled in communication with said communication interface. The processor is programmed to receive, via the communication interface, a control signal from the utility, and determine whether or not to base operation of the irrigation system at least in part on the control signal.

### BRIEF DESCRIPTION OF THE DRAWINGS

FIG. 1 is a block diagram of an example demand response system.
FIG. 2 is a block diagram of an example computing device that may be used with the demand response system shown in FIG. 1.
FIG. 3 is a block diagram of an example irrigation system of use in the demand response system shown in FIG. 1.
FIG. 4 is a flow chart of an example method for controlling an irrigation system.

### DETAILED DESCRIPTION OF EMBODIMENTS OF THE INVENTION

The example systems and methods described herein overcome at least some known disadvantages of known energy demand response systems and water use restrictions by providing an irrigation system that is responsive to demand response signals. More specifically, in some embodiments described herein, an irrigation controller is provided for controlling an irrigation system. The irrigation controller includes a communication interface for receiving a signal from a utility, and a processor coupled in communication with the communication interface. The processor is programmed to receive, via the communication interface, a control signal from the utility, and determine whether or not to base operation of the irrigation system at least in part on the control signal.

Technical features of the methods and apparatus described herein include at least one of: (a) receiving a signal from a utility company; and (b) determining whether or not to base operation of an irrigation system at least in part on the control signal.

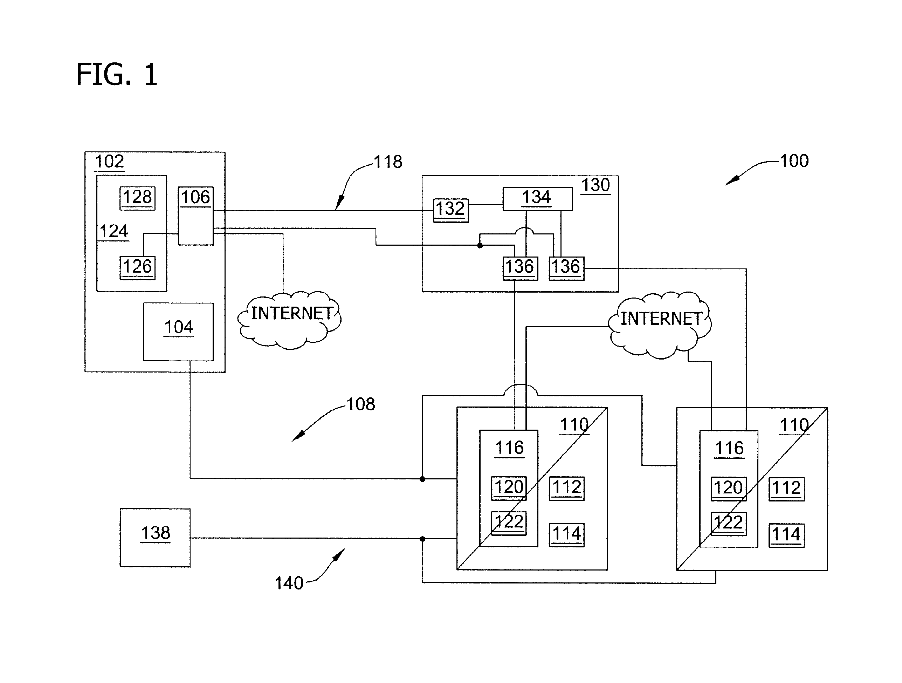

FIG. 1 illustrates an example demand response system 100. In the example embodiment, demand response system 100 is coupled to an controlled by a utility 102. Utility 102 includes an electric power generation system 104 and a computing device 106. Computing device 106 enables utility 102 to communicate with customers and electric power generation system 104 supplies electrical power to customers via an electric network 108. Electric power generation system 104 may include a generator driven by, for example, a gas turbine engine, a hydroelectric turbine, a wind turbine, one or more solar panels, and/or another suitable generation system. In other embodiments, electric power generation system 104 may be at a different location from computing device 106 and/or computing device 106 may not be positioned within utility 102 and may be external to utility 102.

In the example embodiment, computing device 106 is communicatively coupled to a plurality of buildings 110, which may be occupied by a plurality of customers. It should be noted that, as used herein, the term "couple" is not limited to a direct mechanical, electrical, and/or communication connection between components, but may also include an indirect mechanical, electrical, and/or communication connection between multiple components.

Electric power generation system 104 is coupled to buildings 110 via electric network 108 to provide power to buildings 110. More specifically, in the example embodiment, each building includes an irrigation system 112 that utilizes power provided by electric power generation system 104. Building 110 may include other power consuming devices 114. Power consuming devices 114 may be any type of device that consumes electrical power including, for example, an electric water heater, an air conditioner, a pool pump, etc.

In the example embodiment, electric network 108 is illustrated in a single line diagram. Electric network 108 may, however, include multiple wires carrying multiple phases of electric power and buildings 110 may be connected to different phases of electric power. Further, electric network 108 may include additional elements including, for example, transformers, substations, switches, nodes, etc.

Computing device 106 is coupled to at least one user notification device 116 within each building 110 via a network 118 that enables computing device 106 to communicate with user notification device 116. Network 118 may include a private network, a public network, the Internet, etc. In the example embodiment, user notification device 116 may be a computer, a cellular phone, and/or a smart device, including a smart box and/or smart thermostat. Alternatively, user notification device 116 may be any other device that is configured to communicate with computing device 106. Moreover, in the example embodiment, user notification device 116 may be a home automation system. User notification device 116 includes a user interface 120 that receives at least one input from a user, such as from a customer of utility 102. In other embodiments, user notification device 116 may not include user interface 120. In the example embodiment, user interface 120 may include, for example, a keyboard, a pointing device, a mouse, a stylus, a touch sensitive panel (e.g., a touch pad or a touch screen), a gyroscope, an accelerometer, a position detector, and/or an audio input interface (e.g., including a microphone) that enables the user to input pertinent information.

Moreover, in the example embodiment, user notification device 116 includes a presentation interface 122 that presents information, such as information regarding demand response programs and/or demand response events that are received from utility 102, input events, and/or validation results, to the user. In the example embodiment, presentation interface 122 includes a display adapter (not shown) that is coupled to at least one display device (not shown). More specifically, in the example embodiment, the display device is a visual display device, such as a cathode ray tube (CRT), a liquid crystal display (LCD), an organic LED (OLED) display, and/or an "electronic ink" display. Alternatively, presentation interface 122 may include an audio output device (e.g., an audio adapter and/or a speaker) and/or a printer. In other embodiments, user notification device 116 may not include presentation interface 122.

Computing device 106 may communicate with user notification device 116 using a wired network connection (e.g., Ethernet, Internet, an optical fiber, powerline communication), a wireless communication means, such as radio frequency (RF), e.g., FM radio and/or digital audio broadcasting, an Institute of Electrical and Electronics Engineers (IEEE®) 802.11 standard (e.g., 802.11(g) or 802.11(n)), an IEEE® 802.15.4 standard, the Worldwide Interoperability for Microwave Access (WIMAX®) standard, cellular phone technology (e.g., the Global Standard for Mobile communication (GSM)), a satellite communication link, and/or any other suitable communication means. More specifically, in the example embodiment, user notification device 116 is configured to receive at least one signal from computing device 106 that is representative of at least one demand response event. In the example embodiment, the demand response event initiates the implementation of a demand response program that may include a direct load control program, a critical peak pricing program, and/or a time of use program.

In the example embodiment, utility 102 also includes a data management system 124 that is coupled to computing device 106. Data management system 124 may be any device capable of accessing network 118 such as, without limitation, a desktop computer, a laptop computer, or other web-based connectable equipment. More specifically, in the example embodiment, data management system 124 includes a database 126 that includes customer data for each customer of utility 102. In the example embodiment, the customer data may include an enrollment period and/or an enrollment status of each customer participating in at least one demand response program. For example, the data may include a selection made by each customer for at least one demand response program to participate in. The customer data may also include a participation history for each customer. The participation history may include, for example, the previous demand response events that each customer has participated in. The customer data may also include a geographic area of each customer, such as the geographic area where each customer resides. The customer data may include the phase of power utilized by each customer. The customer data may indicate what type of customer each customer is, such as commercial or residential. The customer data may indicate the types of power consuming devices used by each customer include, for example, electric water heaters, air conditioners, pool pumps, irrigation systems 112, etc.

Data management system 124 includes a user interface 128 that receives at least one input from a user, such as an operator and/or employee of utility 102. In the example embodiment, data management system user interface 128 may include, for example, a keyboard, a pointing device, a mouse, a stylus, a touch sensitive panel (e.g., a touch pad or a touch screen), a gyroscope, an accelerometer, a position detector, and/or an audio input interface (e.g., including a microphone) that enables the user to input pertinent information.

Data management system 124 may communicate with computing device 106 using a wired network connection (e.g., Ethernet or an optical fiber), a wireless communication means, such as radio frequency (RF), e.g., FM radio and/or digital audio broadcasting, an Institute of Electrical and Electronics Engineers (IEEE®) 802.11 standard (e.g., 802.11(g) or 802.11(n)), the Worldwide Interoperability for Microwave Access (WIMAX®) standard, cellular phone technology (e.g., the Global Standard for Mobile communication (GSM)), a satellite communication link, and/or any other suitable communication means. More specifically, in the example embodiment, data management system 124 transmits the customer data to computing device 106. While the customer data is shown as being stored in database 126 within data management system 124 in the example embodiment, it should be noted that the customer data may be stored in another system and/or device. For example, computing device 106 may store the customer data therein.

In the example embodiment, system 100 includes an advanced metering infrastructure (AMI) subsystem 130. AMI subsystem 130 includes a gateway 132 and a repeater 134 and AMI meters 136. Repeater 134 repeats or relays data to forward data between devices, such as computing device 106, gateway 132, AMI meters 136, user notification devices 116, etc. AMI meters 136 measure and/or detect an amount of electricity received and/or provided to one or more loads (such as power consuming devices 114, irrigation system 112, etc.) coupled to AMI meters 136. Meters 136 transmit data, such as electricity measurement data, to, and/or receive data from, other devices or systems within network 118 and/or AMI subsystem 130.

System 100 includes, in the example embodiment, a water utility 138. Water utility 138 is coupled to provide water to buildings 110. More specifically, water utility 138 provides water via water pipes 140 to irrigation systems 112.

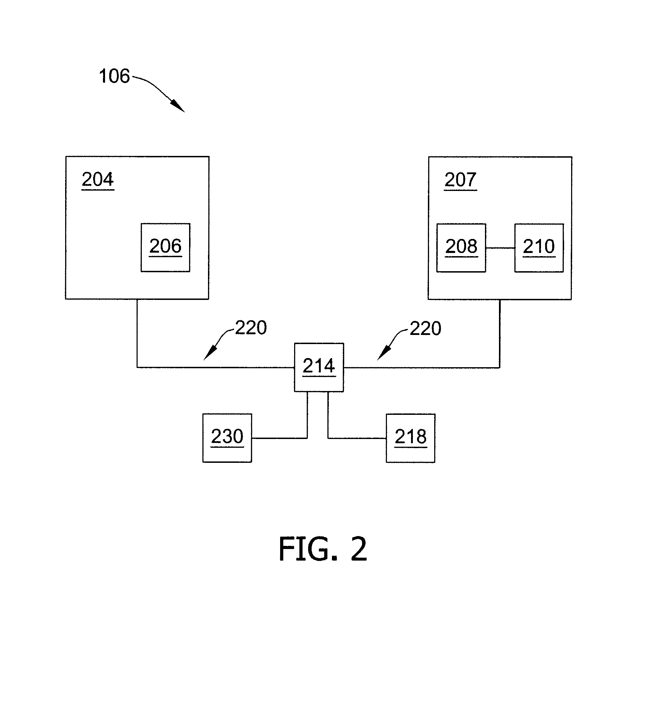

FIG. 2 is a block diagram of computing device 106. In the example embodiment, computing device 106 includes a user interface 204 that receives at least one input from a user, such as an employee of utility 102 (shown in FIG. 1). In the example embodiment, user interface 204 includes a keyboard 206 that enables the user to input pertinent information. Alternatively, user interface 204 may include, for example, a pointing device, a mouse, a stylus, a touch sensitive panel (e.g., a touch pad or a touch screen), a gyroscope, an accelerometer, a position detector, and/or an audio input interface (e.g., including a microphone).

Moreover, in the example embodiment, computing device 106 includes a presentation interface 207 that presents information, such as input events and/or validation results, to the user. In the example embodiment, presentation interface 207 includes a display adapter 208 that is coupled to at least one display device 210. More specifically, in the example embodiment, display device 210 is a visual display device, such as a cathode ray tube (CRT), a liquid crystal display (LCD), an organic LED (OLED) display, and/or an "electronic ink" display. Alternatively, presentation interface 207 may include an audio output device (e.g., an audio adapter and/or a speaker) and/or a printer.

Computing device 106 also includes a processor 214 and a memory device 218. In the example embodiment, processor 214 is coupled to user interface 204, presentation interface 207, and to memory device 218 via a system bus 220. In the example embodiment, processor 214 communicates with the user, such as by prompting the user via presentation interface 207 and/or by receiving user inputs via user interface 204. Moreover, in the example embodiment, processor 214 is programmed by encoding an operation using one or more executable instructions and providing the executable instructions in memory device 218.

The term "processor" refers generally to any programmable system including systems and microcontrollers, reduced instruction set circuits (RISC), application specific integrated circuits (ASIC), programmable logic circuits (PLC), and any other circuit or processor capable of executing the functions described herein. The above represent examples only, and thus are not intended to limit in any way the definition and/or meaning of the term "processor."

In the example embodiment, memory device 218 includes one or more devices that enable information, such as executable instructions and/or other data, to be stored and retrieved. Moreover, in the example embodiment, memory device 218 includes one or more computer readable media, such as, without limitation, dynamic random access memory (DRAM), static random access memory (SRAM), a solid state disk, and/or a hard disk. In the example embodiment, memory device 218 stores, without limitation, application source code, application object code, configuration data, additional input events, application states, assertion statements, validation results, and/or any other type of data. More specifically, in the example embodiment, memory device 218 stores input data received from a user via user interface 204, and/or information received from other components of demand response system 100 (shown in FIG. 1).

Computing device 106, in the example embodiment, also includes a communication interface 230 that is coupled to processor 214 via system bus 220. Moreover, in the example embodiment, communication interface 230 is communicatively coupled to user notification device 116 via network 118 (shown in FIG. 1). In the example embodiment, communication interface 230 communicates with user notification device 116, and/or other components within system 100.

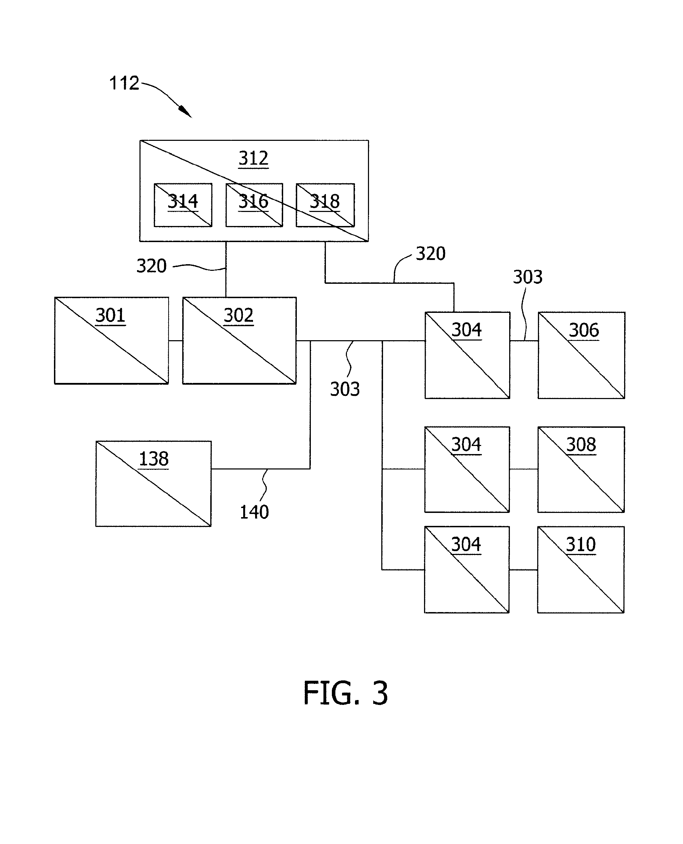

FIG. 3 is a block diagram of irrigation system 112. Irrigation system 112 includes a well 301, a pump 302, water pipes 303, valves 304, irrigation components 306, 308, and 310, and an irrigation controller 312. Irrigation system 112 is coupled, via water pipes 140, to receive water from water utility 138. In the example embodiment, pump 302 is coupled to receive water from well 301. In the example embodiment, pump 302 is an electric motor driven water pump used to pump water received from well 301 to irrigation components 306-310. In other embodiments, pump 302 may be configured, additionally or alternatively, to pump water received from utility 138 to irrigation components 306-310. In some embodiments, irrigation system may not receive water from utility 138 and may only include well 301 and pump 302. In still other embodiments, irrigation system 112 may only be coupled to receive water from utility 138 and may not include well 301 and/or pump 302.

Irrigation controller 312 controls operation of the irrigation system 112. More particularly, irrigation controller 312 controls operation of pump 302 and/or valves 304 to control delivery of water to irrigation components 306-310. Irrigation components 306-310 may include, for example, sprinklers, drippers, misters, etc. In the illustrated embodiment, valves 304 are electronically controlled water valves. Irrigation controller 312 is coupled to valves 304 via wired or wireless communication links 320, thus enabling irrigation controller 312 to operate the valves 304 to selectively permit or restrict the flow of water through the water valve. Irrigation controller 312 may be a standalone controller, may be a part of another controller, or may be a combination of a standalone controller and a part of another controller. In some embodiments, for example, irrigation controller 312 is part of notification device 116. Irrigation controller may be embodied in hardware, software, or a combination of hardware and software. In the example embodiment, irrigation controller 312 includes a processor 314, a memory device 316, and a communication interface. The memory device stores operating parameters, schedules, algorithms, etc. In the example embodiment, memory device stores a defined schedule for operation of irrigation system 112.

In the example embodiment, irrigation controller 312 is coupled, via communication interface 318, to receive control signals transmitted by utility 102. In some embodiments, the control signal transmitted by utility may be a demand response control signal. Processor 314 determines whether or not to base operation of the irrigation system on the received control signal. The decision of whether or not to base operation of the irrigation system on the control signal may be based on numerous factors. For example, the demand response signal may be a mandatory control signal or a voluntary control signal.

A mandatory control signal may require irrigation controller to operate as instructed by the control signal. This may be particularly useful as an enforcement mechanism for water use restrictions. In such instances, local laws, regulations, etc. may forbid or restrict use of an irrigation system between particular hours, when the temperature exceeds a certain temperature, on certain days of the week, etc. Thus, the control signal may instruct irrigation controller 312 to not operate irrigation system 112 in order to comply with the applicable laws, regulations, etc. Alternatively, or additionally, the control signal may instruct irrigation controller when it is permissible to operate irrigation system 112. The mandatory control signal may be an enabling signal (irrigation system may be operated now), a prohibiting signal (irrigation system may not be operated now), or a descriptive signal (irrigation system may be used at the following times). Thus, processor 314 may determine to disregard the received control signal and operate according to an existing operating schedule, operate as instructed by control signal rather than the existing operating schedule, modify the existing operating schedule in accordance with the received control signal, or any combination of the aforementioned operations.

Voluntary control signals may include, for example, demand response event signals. Such voluntary control signals may indicate the occurrence of a demand response event. Depending on the program, or programs, in which the customer is enrolled, and the parameters for participation established by the customer, the irrigation controller 312 may determine whether or not to participate in the demand response event and whether or not to operate in accordance with the control signal. For example, the demand response control signal may indicate a price of electric power and the irrigation controller 312 may be programmed to not operate irrigation system 112 when electric power exceeds a certain price.

In some instances, the irrigation controller 312 may receive a control signal that should be followed, either a mandatory signal or a voluntary signal that meets the established parameters, but the existing operating schedule may not need to be altered to operate in conformity with the received control signal (i.e., it does not conflict with the control signal). In such circumstance, the irrigation controller 112 may be considered as operating based, at least in part, on the control signal, even though it does not vary the existing operating schedule.

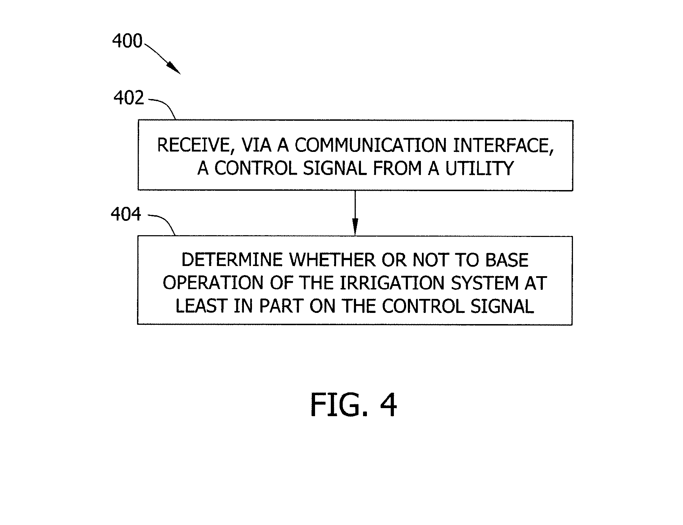

FIG. 4 is a flow chart of an example method 400 for controlling an irrigation system, for example irrigation system 112 (shown in FIGS. 1 and 3). In the example embodiment, a control signal is received 402 from a utility, for example, utility 102 (shown in FIG. 1). The control signal is received 402 via a communication interface, such as communication interface 318 (shown in FIG. 3). Method 400 includes determining 404, whether or not to base operation of the irrigation system at least in part on the control signal.

The methods and apparatus described herein facilitate the reduction of electric energy usage and/or water usage by a customer. The methods and apparatus described herein may enable irrigation systems to participate in electrical energy demand response programs. The methods and apparatus described herein may also enable enforcement of water usage restriction by permitting a water utility, or other utility or regulatory agency, to mandate directly to an irrigation system when it may operate. Further, methods and apparatus described herein may facilitate enabling water utility based demand response programs by providing irrigation systems and controllers that are responsive to demand response control signals.

Example embodiments of methods, systems, and apparatus are described and/or illustrated herein in detail. The methods, systems, and apparatus are not limited to the specific embodiments described herein, but rather, components of each system, as well as steps of each method, may be utilized independently and separately from other components and steps described herein. Each component, and each method step, can also be used in combination with other components and/or method steps.

Although specific features of various embodiments of the invention may be shown in some drawings and not in others, this is for convenience only. In accordance with the principles of the invention, any feature of a drawing may be referenced and/or claimed in combination with any feature of any other drawing.

It will be understood by those of skill in the art that information and signals may be represented using any of a variety of different technologies and techniques (e.g., data, instructions, commands, information, signals, bits, symbols, and chips may be represented by voltages, currents, electromagnetic waves, magnetic fields or particles, optical fields or particles, or any combination thereof). Likewise, the various illustrative logical blocks, modules, circuits, and algorithm steps described herein may be implemented as electronic hardware, computer software, or combinations of both, depending on the application and functionality. Moreover, the various logical blocks, modules, and circuits described herein may be implemented or performed with a general purpose processor (e.g., microprocessor, conventional processor, controller, microcontroller, state machine or combination of computing devices), a digital signal processor ("DSP"), an application specific integrated circuit ("ASIC"), a field programmable gate array ("FPGA") or other programmable logic device, discrete gate or transistor logic, discrete hardware components, or any combination thereof designed to perform the functions described herein. Similarly, steps of a method or process described herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. Although preferred embodiments of the present disclosure have been described in detail, it will be understood by those skilled in the art that various modifications can be made therein without departing from the scope of the disclosure as set forth in the appended claims.

A controller, computer, or computing device, such as those described herein, includes at least one processor or processing unit and a system memory. The controller typically has at least some form of computer readable media. By way of example and not limitation, computer readable media include computer storage media and communication media. Computer storage media include volatile and nonvolatile, removable and non-removable media implemented in any method or technology for storage of information such as computer readable instructions, data structures, program modules, or other data. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Combinations of any of the above are also included within the scope of computer readable media.

Embodiments of the disclosure may be described in the general context of computer-executable instructions, such as program components or modules, executed by one or more computers or other devices. Aspects of the disclosure may be implemented with any number and organization of components or modules. For example, aspects of the disclosure are not limited to the specific computer-executable instructions or the specific components or modules illustrated in the figures and described herein. Alternative embodiments of the disclosure may include different computer-executable instructions or components having more or less functionality than illustrated and described herein.

When introducing elements/components/etc. of the methods, systems, and apparatus described and/or illustrated herein, the articles "a", "an", "the", and "said" are intended to mean that there are one or more of the element(s)/component(s)/etc. The terms "comprising", "including", and "having" are intended to be inclusive and mean that there may be additional element(s)/component(s)/etc. other than the listed element(s)/component(s)/etc.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method (400) of controlling an irrigation system (112), said method (400) comprising:
receiving, via a communication interface (318), a control signal from a utility (102); and
determining whether or not to base operation of the irrigation system (112) at least in part on the control signal.

2. A method (400) in accordance with Claim 1, wherein said determining comprises determining if the control signal is a mandatory control signal.

3. A method (400) in accordance with Claim 2, further comprising operating the irrigation system (112) based at least in part on the control signal when the control signal is a mandatory control signal.

4. A method (400) in accordance with Claim 1, 2 or 3, wherein said determining comprises determining whether an existing operating schedule for the irrigation system (112) is in conflict with the control signal.

5. A method (400) in accordance with Claim 1, 2, 3 or 4, said receiving a control signal from a utility comprises receiving a control signal from a utility (102) that is one of:
a mandatory control signal prohibiting operation of the irrigation system (112) for a period of time;
a mandatory control signal enabling operation of the irrigation system (112) for a period of time; and
a voluntary control signal including utility pricing data.

6. An irrigation controller (312) for use in controlling an irrigation system (112), said irrigation controller (312) comprising:
a communication interface (318) for receiving a signal from a utility company (102); and
a processor (314) coupled in communication with said communication interface (318) and programmed to:
receive, via the communication interface (318), a control signal from the utility (102); and
determine whether or not to base operation of the irrigation system (112) at least in part on the control signal.

7. An irrigation controller (312) in accordance with Claim 6, wherein said processor (314) is programmed to determine if the control signal is a mandatory control signal.

8. An irrigation controller (312) in accordance with Claim 7, wherein said processor (314) is further programmed to operate the irrigation system (112) based at least in part on the control signal when the control signal is a mandatory control signal.

9. An irrigation controller (312) in accordance with Claim 6, 7 or 8, further comprising a memory device (316) for storing an operating schedule for an irrigation system (112), wherein said processor (314) is programmed to determine whether the operating schedule for the irrigation system (112) is in conflict with the control signal.

10. An irrigation controller (312) in accordance with Claim 6, 7, 8 or 9, wherein the control signal is one of:
a mandatory control signal prohibiting operation of the irrigation system (112) for a period of time;
a mandatory control signal enabling operation of the irrigation system (112) for a period of time;
a descriptive control signal including an identification of when the irrigation system (112) may be operated; and
a voluntary control signal including utility pricing data.

11. A home automation system comprising:
an irrigation system (112); and
an irrigation controller (312) in accordance with any one of Claims 6 to 10, said irrigation controller (112) coupled to control operation of the irrigation system (112).

12. A computer readable medium comprising instructions which, when executed by a processor, perform a method in accordance with any one of Claims 1 to 5.
